# EUROPEAN PATENT SPECIFICATION

(11) **EP 1 033 924 B1**
(45) Date of publication and mention of the grant of the patent: **24.09.2003**
(21) Application number: 98955626.1
(22) Date of filing: 24.11.1998
(51) Int. Cl.: A43B 13/20

(54) **METHOD FOR MANUFACTURING THE SOLE STRUCTURE OF A TRANSPIRING FOOTWEAR**
VERFAHREN ZUR HERSTELLUNG EINER SOHLENSTRUKTUR FÜR VENTILATIONSSCHUHWERK
PROCEDE DE FABRICATION D'UNE STRUCTURE DE SEMELLE POUR CHAUSSURE DE SPORT VENTILEE

(30) Priority: 25.11.1997 FI 974317
(43) Date of publication of application: 13.09.2000
(73) Proprietor: Sievin Jalkine Oy, 85310 Sievi as. (FI)
(72) Inventor: JOKINEN, Markku, Oskari, FIN-85310 Sievi as. (FI)
(74) Representative: Lassenius, Birgitta Maria
(86) International application number: FI9800920
(87) International publication number: WO99026504

(56) References cited:
- EP-A2- 0 293 034
- PATENT ABSTRACTS OF JAPAN; & JP 2252402 A (MOON STAR CO) 11 October 1990.

## Description

The invention relates to a method for manufacturing the sole structure of a breathable shoe, more specifically to a method as defined in the preamble of claim 1.

In footwear with an outsole structure of a non-breathable material, for instance rubber, PU, PVC or TR, the wearer's feet suffer and start perspiring because the shoes do not breathe. This is particularly annoying in various working and safety shoes, first, because they are worn during work all day long and second, because their strong structure makes them heavy and stiff compared to normal shoes. There have been various attempts to resolve this problem, which, however, have not been very successful.

EP patent specification 382 904 discloses a shoe in which the inner ventilation has been achieved by fitting a vapour-permeable membrane between the perforated insole and the outsole and by providing the outsole with vertical through-holes, which provide ventilation canals between the inside of the shoe and the outside atmosphere.

This prior art solution has the disadvantage of the holes opening up through the outsole, thus being easily clogged by e.g. sand, pebbles and mud, and in the case of working footwear, also by sharp objects such as pieces of glass, turnings and the like. When clogged, the holes no longer act as ventilation canals, and the feet will perspire despite the holes. Sharp objects which penetrate into the holes will break the vapour membrane, which then loses its purpose. Above all, through-holes in the sole structure decrease work safety in contributing to the penetration of sharp objects into the feet.

EP patent specification 479 183 discloses another solution to this breathable problem. To prevent the ventilation holes from clogging up, holes have been provided both in the outsole and in the side wall of the sole, at the heel and the toe. The side wall surrounds the shoe and is fixed to the upper. A vapour-permeable membrane has been disposed between the side wall of the outsole and of the inner sole.

In this prior art shoe, the insole is constructed with grooves and ridges. These allow moisture inside the shoe to reach the atmosphere through the said grooves in the breathing insole, the perforated outer band surrounding them, the vapour-permeable membrane and the perforated side wall of the outsole.

The sole structure of this prior art shoe is made by manufacturing the outsole and the supporting structure separately and by inserting the vapour-permeable membrane between these in the side wall. The unit sole thus formed is glued to the lasted upper. Since the perforated parts must not be covered with glue or any other means, the adhering surfaces of the outer band will be reduced, thus jeopardising secure attachment. The sole structure cannot be manufactured by direct injection moulding straight onto the lasted upper.

The object of one aspect of the present invention is to provide a shoe, especially a working and safety shoe, in which the shoe is effectively ventilated through the outsole edges, i.e. the side edges, and in which the sole structure is manufactured by direct injection moulding to the lasted upper.

Thus, the essential feature of the invention is to provide an effectively ventilated shoe which is easy to manufacture and does not entail substantial additional work steps nor additional costs compared to conventional shoe manufacture, and in which the correct positioning of the ventilation holes does not either cause substantial additional operations.

A further object of the invention is to provide a sole structure which is particularly adapted for working and safety shoes. Such outsoles should have resistant and extremely tight joints so as to prevent caustic or any other harmful substances from penetrating inbetween the sole and the upper, and from there to the inside of the shoe. Since the outsole of these shoes frequently have a nail shield extending over the entire sole and thus preventing any ventilation through the outsole, a further object of the invention is to provide a sole structure which is ventilated through the sole despite the nail shield.

A still further object of the invention is to provide a sole structure in which the vapour-permeable and waterproof membrane is optimally protected against external impacts so as to conserve its vital properties.

This has been achieved with the method in accordance with the invention, whose chief characteristics are described in the characterising clause of the accompanying claim 1. Other characteristics of the invention are disclosed in the accompanying dependent claims.

The method of the invention and the sole structure manufactured by this method are described in greater detail in the preferred embodiment examples below, with reference to the accompanying drawings, in which:
- figure 1: shows a longitudinal elevational section of the safety shoe of the invention, with the top part of the shoe cut off,
- figure 2: shows a cross-section of the shoe of figure 1 at the front part of the shoe,
- figure 3: is an exploded view of figure 2,
- figure 4: shows an elevational longitudinal section of a second embodiment of the safety shoe of the invention, with the top part of the shoe cut away,
- figure 5: shows a cross-section of the shoe of figure 4 at the front part of the shoe,
- figure 6: shows a cross-section of the shoe of figure 4 at the transverse groove 23,
- figure 7: is a lateral view of the shoe of figure 1 or figure 4,
- figure 8: is an elevational section and perspective view of an embodiment of the honeycomb of the invention,
- figure 9: is a longitudinal cross-section of another embodiment of the shoe of the invention, with the top part of the shoe cut away,
- figure 10: is a cross-section of the shoe of figure 9 at the front part of the shoe,
- figure 11: is an exploded view of figure 10, and
- figure 12: is an axonometric view of the last and mould used in the manufacture of the shoe.

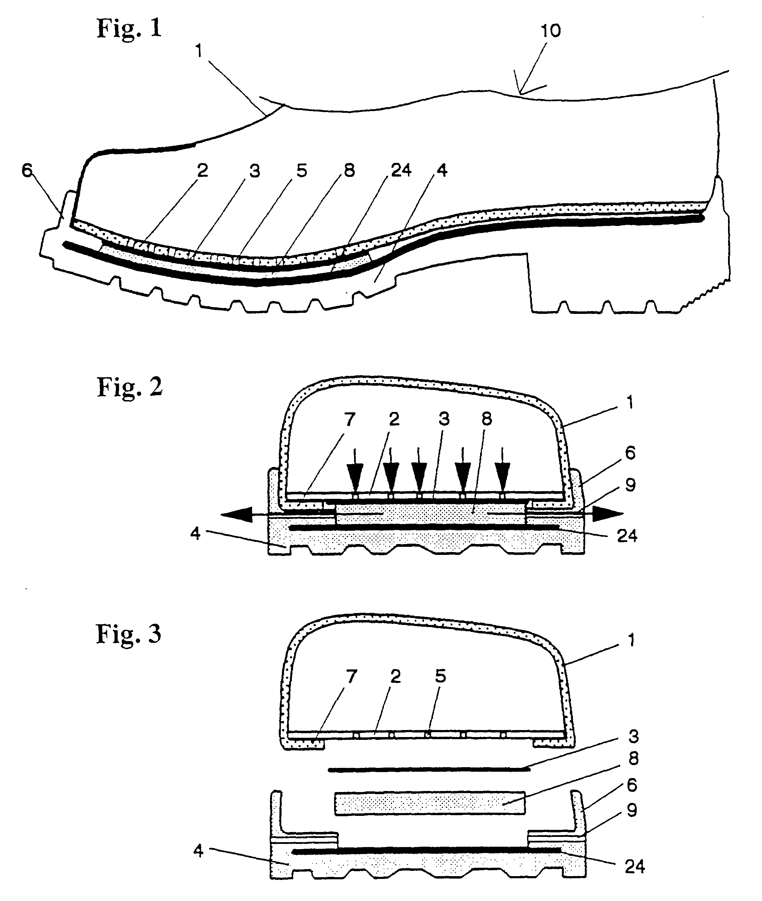

The shoe in accordance with the invention illustrated in figures 1-3 is generally denoted with reference numeral 10.

The shoe 10 consists of a lasted upper 1, an insole 2, a vapour-permeable membrane 3 and an outsole 4. In figures 1, 4 and 9, the insole 2 is illustrated with black dots and in figures 2, 3, 5, 6, 10 and 11 it is shaded. In figures 1, 4 and 9 it is also shown with a slightly larger thickness. The insole 2 is perforated, the holes being marked with reference numeral 5. The vapour-permeable membrane 3 is made for instance of the commercialy available material GORE-TEX®, and it is located immediately underneath the insole. The membrane 3 should be well protected against damage to its delicate, vapour-permeable and waterproof surface. The outer band of the outsole 4, being adhered to the upper structure 1 of the shoe, is marked with reference numeral 6.

The edge parts of the upper structure 1, which are folded underneath the insole, are marked with reference numeral 7.

The honeycomb in accordance with the invention is a piece of material 8 with an air-permeable fibre structure, which is disposed directly underneath the vapour-permeable membrane 3. The honeycomb 8 has approximately the same size and shape as the vapour-permeable membrane 3. In figure 1 the honeycomb 8 is illustrated with a smaller thickness than in figures 2 and 3, although figure 2 and its exploded projection 3 otherwise illustrate the structure of figure 1 in cross-section. The honeycomb 8 may vary in thickness. Its essential feature is to provide adequate ventilation efficiency. It preferably covers the front part of the foot and extends appropriately to the edges 7 of the upper structure at the toe and front part of the shoe. The honeycomb is made of wool, synthetic fibre or any similar material, which has been formed as a felt-like, air-permeable piece of material. Such a honeycomb 8 made of a felt-like material is well adapted for a shoe which is worn in dry conditions.

At the side edgs of the outsole 4 substantially horizontal air vents 9 are provided, which extend from the outer surfaces of the two side edges to the side edges of the honeycomb 8, thus providing a ventilation canal from the ambient air through the air-permeable fibre structure 8, the vapour-permeable membrane 3 and the perforations 5 in the transpiring insole 2 to the inside of the shoe. The nail shield 24 has been fixed directly to the lower surface of the honeycomb 8.

When the shoe is worn, moisture generated within the shoe is discharged through the perforations 5 in the insole, the vapour-permeable membrane 3 and the air-permeable structure of the honeycomb 8 into the air vents 9 in the outsole and from there on to the outside atmosphere. With each down-ward pressure of foot step the honeycomb is slightly compressed, resuming its original shape subsequently as the foot is lifted. This movement produces a pumping action on the honeycomb, thus enhancing the ventilation of the shoe. Both the honeycomb 8 and the vapour-permeable membrane 3 are well protected from external substances with the aid of the sole 4 so that they are not affected by dirt, sand, various broken pieces or similar things on the ground. The nail shield 24 does not prevent ventilation of the shoe, but instead, it acts as additional protection for the honeycomb and the vapour-permeable membrane.

The shoe of this embodiment is basically worn in dry conditions. Should the feet get completely wet, the honeycomb 8 might also get wet, and the felt-like honeycomb would require a long time to dry. Under totally dry conditions, at a paper mill for instance, footwear could be worn which is not provided with the vapour-permeable membrane 3. Under such conditions, waterproofness is not required for the said membrane, and the perforated insole has the same property of vapour permeability as the membrane.

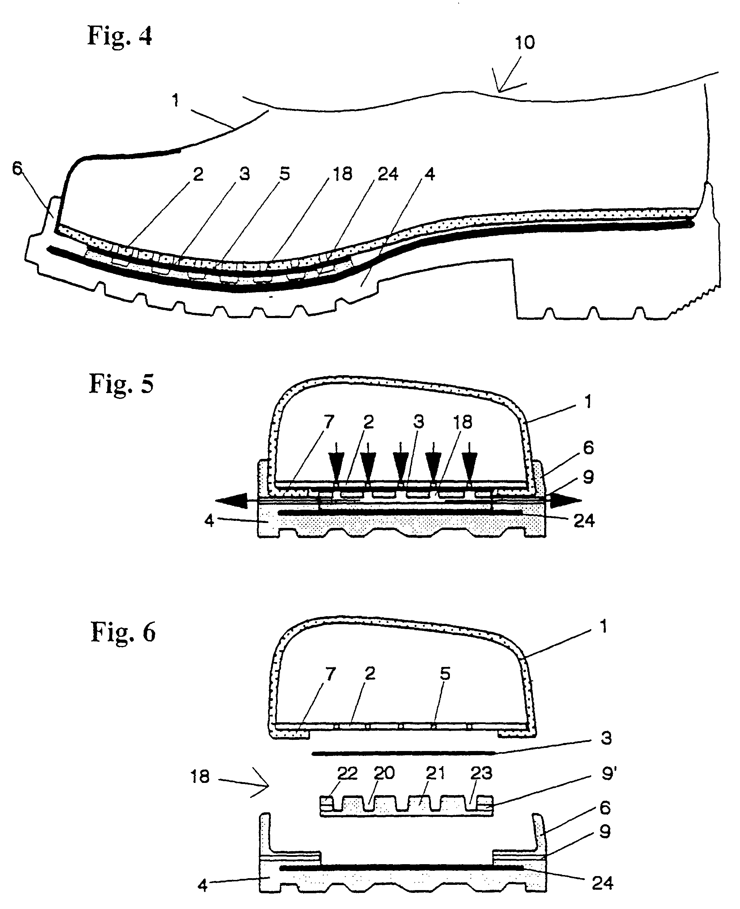

Regarding the honeycomb, the second embodiment illustrated in figures 4-6 differs from that of figures 1-3 in so far that in this embodiment, the honeycomb consists of a mouldable material, e.g. a piece of material 18 of rubber, PU, PVC, TR or the like. In the piece of material a set of canals has been formed, allowing the upper surface of the honeycomb to interface with the vapour-permeable membrane and the side edges of the honeycomb to interface with the air vents 9 formed in the outsole. The honeycomb 18 is manufactured separately, preferably by direct injection moulding. Such a honeycomb 18 is suitable for shoes to be worn in humid conditions, because it does not get wet the way the felt-like honeycomb 8 described above does. In other respects, the shoe has the same design as the one illustrated in figures 1-3, and the same reference numerals have been used for identical parts.

The honeycomb 18 has grooves 20 and ridges 21 in the longitudinal direction of the shoe, and the honeycomb is surrounded by an edge 22 and a groove 23 inside this. Extending the air vents 9 of the outsole, corresponding air vents 9' have been formed at the longitudinal edges of the honeycomb 18, these air vents interfacing with a groove 23 extending on the circumference of the honeycomb. Such a honeycomb design allows air to leave the shoe through the perforations 5 in the insole 2 and the vapour-permeable membrane 3 and further through the grooves 20 and 23 and the air vents 9' and 9 into the outside atmosphere. In this honeycomb as well, a pumping action enhancing ventilation is produced as the honeycomb is slightly compressed with each down-ward pressure of foot step, subsequently resuming its normal shape as the wearer lifts his foot.

The nail shield 24 is fixed to the lower surface of the honeycomb 18. Both the embodiments described above may be without a nail shield, unless it is required by the working conditions.

In the shoes described above, the aerating part extends only over the area of the front part of the foot, which is in most need of ventilation. However, it could be extended over the entire foot, the insole being then perforated over its total area and the vapour-permeable membrane and the honeycomb covering the entire lower surface of the insole.

The figures show a preferred lightweight working shoe or normal shoe, provided with an insole perforation extending over the entire foot and accordingly with a foot supporting structure which is grooved over its entire length.

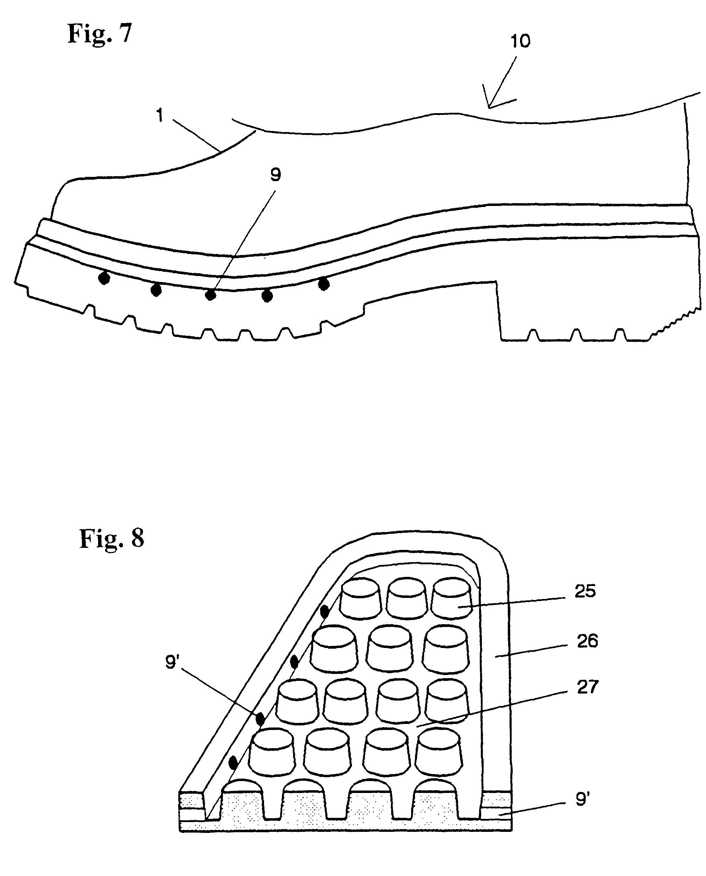

Figure 7 shows both the embodiments described above. Air vents 9 opening onto or through the side edges of the outsole can be seen in the figure.

Figure 8 illustrates an additional embodiment of the honeycomb in accordance with the invention, shown as an elevational cross-section and a perspective view. The honeycomb is surrounded by a rim 26, in which extensions 9' of the air vents 9 have been formed. Ducts 27 allowing an air flow arise between the protuberances 25 having the shape of a truncated cone.

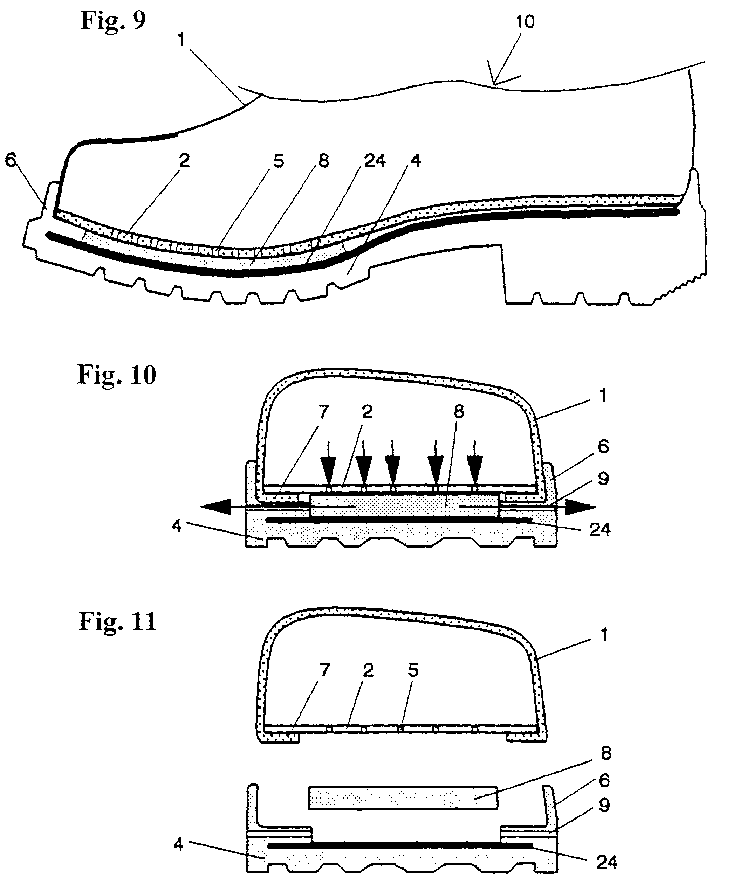

Figures 9-11 illustrate another embodiment of the sole structure of the invention. This shoe corresponds to that of figures 1-3 in every other respect, except for the vapour-permeable membrane 3. The embodiment in figures 9-11 has no membrane 3. The membrane can be left out from the shoe if the shoe is intended for use in dry conditions, for instance at a paper mill, at printing works or the like. Such a design is perfectly suitable for a sandal for instance. In that case the waterproofness of the membrane is not required, and its vapour permeability, i.e. breathing property is provided by the perforated insole 2. In figures 9-11, the honeycomb is shown as honeycomb 8 with a fibre structure. It can be replaced with honeycomb 18 or any similar honeycomb.

The manufacture of the shoe in accordance with the invention is performed using the conventional injection moulding method which has been used in shoe manufacture ever since the 1960's. The direct injection moulding technique is the most straightforward and clearly most economical manufacturing method, which also yields a good result. Compared to another common technique, in which the outsole is separately injection moulded and subsequently glued to the lasted shoe, the direct moulding technique yields a tighter joint between the upper and the side wall of the shoe than does the glueing method. A tight joint is vital especially in working and safety shoes.

Hence the manufacture of the shoe of figures 1-3 is preferably performed so that the upper 1 is formed on the last and the edge 7 of the upper is folded underneath the insole 2 and is fastened to it. The vapour-permeable membrane 3, the honeycomb 8 and the nail shield 24 are attached to the lower surface of the structure thus obtained. The sole mould is fitted to enclose the last. The sole mould has pins at the sides to form air vents 9. During the moulding operation, the nail shield and the honeycomb are fixed inside the outsole.

The sole structure of the shoe can optionally be formed in two different steps, forming first the unit sole e.g. by direct injection moulding or by assembling separate sheets, the honeycomb 8 or 18 being then fixed either to the lower surface of the lasted upper or in a recess formed in the slipsole, and the slipsole being subsequently glued to the upper structure.

The same alternative manufacturing methods apply to the shoes shown in figures 4-6. The sole structure of figures 9-11 can also be produced by these alternative manufacturing methods, without the vapour-permeable membrane 3, however.

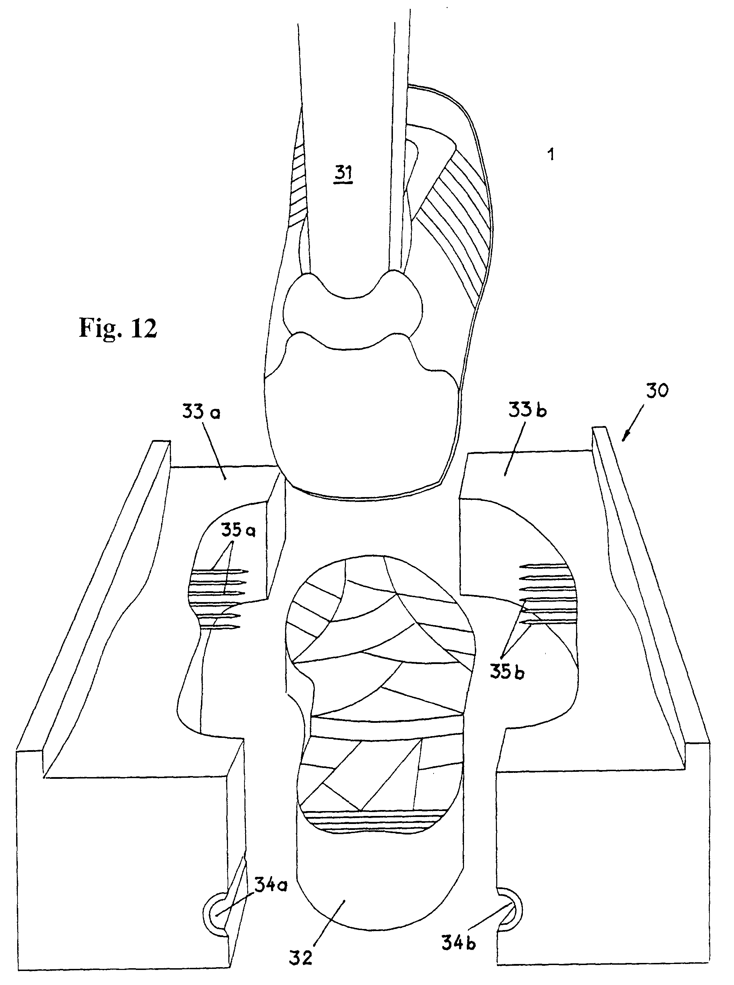

Figure 12 illustrates the last 31 and the injection mould 30 used in the manufacture of the safety shoe 10 in accordance with the invention, the last and the mould being of known design. The sole structure 4 is formed and fixed to the upper structure 1 of the shoe as follows. The upper of the safety shoe, which has been separately manufactured, is fitted on the last. The honeycomb 8 or 18 is fixed to the bottom of the upper preferably by glueing, the glue being applied only to the border area of the honeycomb. The nail shield 24 is fixed to the lower surface of the honeycomb and the bottom of the upper surrounding this, preferably by glueing, the glue being applied to the entire upper surface of the shield. The shield surface may be entirely covered with glue, since no moisture can be transferred through the nail shield which is made of metal.

The mould is closed by fitting the sole member 32 between the mould side members 33a and 33b so that the sets of pins 35a, 35b, provided on both sides of the mould and extending parallel with the plane of the sole member, engage vertically the empty space between the sole member 32 and the upper. As the mould is closed, the points of the pins 35a and 35b touch the sides of the honeycomb 8 or alternativelyy the points of the pins penetrate through the edge 22 of the honeycomb 18 made of plastic and having a duct structure. The upper 1 placed on the last 31 closes the mould tightly from above. With the mould closed, the material components of the sole structure are directly injected into the moulding space through a hole formed by the two semiholes 34a and 34b. The mould, which has been preheated by a well established method, is supplied with two liquid components, for instance polyol and isocyanate, and any other required chemicals, such as antistatic agents. The components react with one another at the temperature and under the pressure prevailing in the mould, and the cellular polyurethane sole is finished in a few minutes. The moulding process is completely automated and computer controlled.

To end the process, the shoe is withdrawn from the last 31, and after the shoe has cooled, the trimmings, i.e. the surplus material, is removed from the edge surfaces. Now the shoe is finished. Owing to the injection moulding of the sole structure, the sole will have high bending resistance and wear resistance, and it will withstand attack from oil and several chemicals, and is also leightweight. In the moulding process, the honeycomb 8 or 18 and the nail shield 24, which have been glued to the bottom of the upper, will adhere to the sole structure.

In the moulding process, open air vents 9, 9' have been simply formed in the sole structure by means of pins 35a and 35b provided in the mould. No sealing compound will penetrate into the vents, because, as the mould closes, the pin ends of the side members bear tightly against the lateral surfaces of the felt honeycomb 8 or are slightly pressed into this. Alternatively the pin ends split the intact edge 22 of the honeycomb body 18 having a duct structure, forming air vents 9, 9' between the duct structure of the honeycomb 18 and the outside atmosphere. The honeycomb 8 or 18, in turn, communicates directly through the vapour-permeable membrane and the perforated insole with the inside of the shoe.

The sole structure can alternatively be manufactured in two separate steps so that the sole structure is made as an independent structure, which is fixed to the insole 2 of the upper in the second step. Usually, the manufacture of a unit sole is preferably performed by injection moulding in a similar mould, as described above. In that case, the upper member of the mould seals the mould from above. A cavity of the size of the honeycomb is preferably formed in the unit sole, the vents 9 being moulded in the sides of the sole structure by means of the pins, between the cavity and the outside. A separate honeycomb is either a component 8 with a felt-like structure or a separately moulded component with a duct structure. The felt-like structure 8 is fitted in the cavity of the unit sole, the vents 9 opening into the side walls of the said structure. The unit sole and the component fitted in it are fixed preferably with glue to the sole 2 of the upper. The glue is preferably applied only to the border area of the sole structure, and at least the upper surface of the component should remain free of glue. The honeycomb 18 having a duct structure to be fitted on the unit sole comprises an array of canals formed by alternating grooves and ridges, and there is no rim around the honeycomb. This honeycomb is fitted into the honeycomb cavity in the unit sole, the air vents 9 opening into the sides of the honeycomb, thus ensuring air circulation.

When a normal working shoe is manufactured, no nail shield nor vapour-permeable membrane is needed. The manufacturing method is identical with the alternative methods outlined above in other respects.

Two different types of honeycombs have been described above, a structure 8 of a breathable material and a honeycomb 18 made of plastic, rubber or the like, which is equipped with a set of canals. A honeycomb of the latter type is preferably made by means of injection moulding, and it may, of course, be shaped in various ways. The ridges and grooves may be continous or discontinuous, they may zigzag or undulate. Usually the honeycomb is placed only in the front part of the shoe, extending all the way to the edges 7 which have been folded under the insole 2 of the upper structure 1. Nevertheless, it may be extended all the way to the heel and enlarged so as to extend to the side wall of the outsole in models in which the upper structure is not lasted under the insole, but the insole is attached to the upper I by stitching.

The sole structure in accordance with the invention can of course be used in any other type of shoe, besides working and safety shoes.

The essential feature of the sole is to provide a ventilation canal between the inside of the shoe and the outside atmosphere through perforations in the insole, a vapour-permeable membrane, which may be included, and air vents which open into the sides of the outsole and the sides of the honeycomb.

## Claims

1. A method for manufacturing the sole structure of a breathable shoe, in which the air passes from the inside of the shoe through a perforated insole (2), a honeycomb (8; 18) provided in the interface between the insole and the outsole (4) and air vents (9) provided at the outer edges of the outsole, to the outside atmosphere and vice versa, whereby the upper structure (1) is fitted on the last (31) and the breathing sole structure is injection-moulded and fixed, **characterised in that** the honeycomb (8; 18) is attached in an air-permeable manner to the insole (2) of the upper structure (1), whereby the mould (30) known *per se* for the sole structure (4), which comprises a sole member (32) forming the tread pattern, two side members (33a, 33b) having pins (35a, 35b) projecting parallel to the sole structure in their side walls, and a last (31) sealing the mould tightly, is closed and direct injection moulding is performed, said pins (35a, 35b) being adapted to extend into close contact with the side walls of the honeycomb (8; 18) to form air vents (9) between the honeycomb and the outside atmosphere, the sole structure being formed directly fixed to the upper structure.

2. A method as claimed in claim 1, **characterised in that** the honeycomb (18) has a duct structure and is surrounded by an intact edge (22) and **in that** the points of the pins (35a, 35b) are adapted to penetrate the edge (22) surrounding the honeycomb (18) to form canals (9') between the air vents (9) and the duct structure (20, 21, 23) of the honeycomb (18).

3. A method as claimed in claim 1, **characterised in that** the honeycomb (8) has a felt-like structure and **in that** the points of the pins (35a, 35b) are adapted to penetrate into the felt-like honeycomb (8) at least to some extent in order to extend the air vents (9) to the honeycomb (8).

4. A method as claimed in any of the preceding claims, **characterised in that** the attachment of the honeycomb (8; 18) to the insole (2) of the upper structure (1) is performed by means of a glue, which is applied to the border area of the honeycomb alone.

5. A method as claimed in any of the preceding claims, **characterised in that** a vapour-permeable membrane (3) is fixed to the insole (2) of the upper structure (1) before the honeycomb (8; 18) is fixed to it, the attachment being preferably performed by means of a glue, which is applied to the border area of the vapour-permeable membrane (3).

6. A method as claimed in any of the preceding claims, **characterised in that** a nail shield (24) is fixed to the insole (2) of the upper structure (1) after the honeycomb (8; 18) has been fixed to it, the attachment being preferably performed by means of a glue, which is applied to the upper surface of the entire shield.

7. A method for manufacturing the sole structure of a breathable shoe in which the air passes from the inside of the shoe through a perforated insole (2), a honeycomb (8; 18) provided in the interface between the insole and the outsole (4) and air vents (9) provided at the outer edges of the outsole to the outside atmosphere and vice versa, whereby a separately injection-moulded sole structure (4) is fixed to the upper structure (1) of the shoe, **characterised in that** the sole structure of the shoe is manufactured in a mould known *per se*, which comprises a sole member forming the tread pattern, two side members (33a, 33b) having pins (35a, 35b) projecting parallel to the sole plane in their side walls, and an upper member forming the upper surface of the sole structure and having a body of the size of the honeycomb for the cavity to be formed for the honeycomb, **in that** the mould is closed and injection moulding is performed, said pins (35a, 35b) being adapted to extend into close contact with the side walls of the body forming the cavity, in order to form air vents (9) between the honeycomb cavity and the outside atmosphere, **in that** a separate honeycomb (8; 18) is fitted in the honeycomb cavity of the sole structure (4) and **in that** the sole structure (4) together with the honeycomb (8; 18) is fixed to the perforated insole (2) of the upper structure (1), preferably by glueing.

8. A method as claimed in claim 7, **characterised in that** the honeycomb is moulded separately with a duct structure, in which the grooves between the ridges extend all the way to the perimeter of the honeycomb, and thus, when fitted into the honeycomb cavity of the sole structure (4), the honeycomb will interface with the air vents (9) to allow air circulation.

9. A method as claimed in claim 7, **characterised in that** the honeycomb (8) has a felt-like structure, and thus, when fitted into the honeycomb cavity of the sole structure (4), the honeycomb will interface with the air vents (9) to allow air circulation.

10. A method for manufacturing the sole structure of a breathable shoe in which the air passes from the inside of the shoe through a perforated insole (2), a honeycomb (8; 18) provided in the interface between the insole and the outsole (4) and air vents (9) provided at the outer edges of the outsole to the outside atmosphere and vice versa, whereby a separately injection-moulded sole structure (4) is fixed to the upper structure (1) of the shoe, **characterised in that** the sole structure of the shoe is manufactured in a mould known *per se,* which comprises a sole member forming the tread pattern, two side members (33a, 33b) having pins (35a, 35b) projecting parallel to the sole plane in their side walls, and an upper member forming the upper surface of the sole structure and having a body of the size of the honeycomb for the cavity to be formed for the honeycomb (8; 18), **in that** the mould is closed and injection moulding is performed, said pins (35a, 35b) being adapted to extend into close contact with the side walls of the body forming the cavity, in order to form air vents (9) between the honeycomb cavity and the outside atmosphere, **in that** a separate honeycomb (8; 18) is fixed to the insole (2) of the upper structure (1) at a location corresponding to the honeycomb cavity and **in that** the sole structure is fixed preferably by glueing to the insole (2) of the upper structure so that the honeycomb engages the honeycomb cavity.

11. An injection mould for manufacturing the sole structure of a breathable shoe, in which the air passes from the inside of the shoe through the perforated insole (2), a honeycomb (8; 18) provided in a honeycomb cavity at the interface between the insole and the outsole (4) and air vents (9) provided at the outer edges of the outsole to the outside atmosphere and vice versa, the mould comprising a sole member forming the tread pattern, two side members (33a, 33b) and an upper member forming the upper surface of the sole structure, **characterised in that** the side walls of both the side members (33a, 33b) have pins (35a, 35b) extending parallel to the sole plane and adapted to extend into close contact with the side walls of the mould body forming said cavity in order to provide air vents (9) between the honeycomb cavity and the outside atmosphere.

## Patentansprüche

1. Verfahren zur Herstellung der Sohlenstruktur eines atmungsaktiven Schuhs, bei welchem die Luft von dem Inneren des Schuhs durch eine perforierte Innensohle (2) strömt, eine Wabenstruktur (8; 18) an der Schnittstelle zwischen der Innensohle und der Außensohle (4) vorgesehen ist und an den äußeren Rändern der Außensohle Entlüftungselemente (9) zu der Außenatmosphäre und umgekehrt vorgesehen sind, wobei die Obermaterialstruktur (1) an dem Leisten (31) eingerichtet wird und die atmungsaktive Sohlenstruktur spritzgegossen und befestigt wird,
**dadurch gekennzeichnet, dass** die Wabenstruktur (8; 18) in einer luftdurchlässigen Weise an der Innensohle (2) der Obermaterialstruktur (1) befestigt wird, wobei die für die Sohlenstruktur (4) an sich bekannte Gießform (30), welche ein das Trittmuster bildendes Sohlenteil (32) umfasst, zwei Seitenteile (33a, 33b), welche in ihren Seitenwänden parallel zu der Sohlenstruktur hervorstehende Stifte (35a, 35b) haben, und einen die Gießform dicht versiegelnden Leisten (31), geschlossen wird und direktes Spritzgießen ausgeführt wird, wobei die Stifte (35a, 35b) ausgebildet sind, um sich in engen Kontakt mit den Seitenwänden der Wabenstruktur (8; 18) zu erstrecken, um Entlüftungselemente (9) zwischen der Wabenstruktur und der Außenatmosphäre zu bilden, wobei die gebildete Sohlenstruktur direkt an der Obermaterialstruktur befestigt wird.

2. Verfahren nach Anspruch 1,
**dadurch gekennzeichnet, dass** die Wabenstruktur (18) eine Kanalstruktur hat und von einem intakten Rand umgeben ist (22) und dass die Spitzen der Stifte (35a, 35b) ausgebildet sind, um den die Wabenstruktur (18) umgebenden Rand (22) zu durchdringen, um Kanäle (9') zwischen den Entlüftungselementen (9) und der Kanalstruktur (20, 21, 23) der Wabenstruktur (18) zu bilden.

3. Verfahren nach Anspruch 1,
**dadurch gekennzeichnet, dass** die Wabenstruktur (8) eine filzähnliche Struktur hat und dass die Spitzen der Stifte (35a, 35b) ausgebildet sind, um in die filzähnliche Wabenstruktur (8) wenigstens zu einem gewissen Ausmaß einzudringen, um die Entlüftungselemente (9) der Wabenstruktur (8) zu verlängern.

4. Verfahren nach einem der vorhergehenden Ansprüche,
**dadurch gekennzeichnet, dass** die Befestigung der Wabenstruktur (8; 18) an der Innensohle (2) der Obermaterials (1) mittels eines Klebers durchgeführt wird, welcher nur an dem Randbereich der Wabenstruktur aufgetragen wird.

5. Verfahren nach einem der vorhergehenden Ansprüche,
**dadurch gekennzeichnet, dass** eine dampfdurchlässige Membran (3) an der Innensohle (2) der Obermaterialstruktur (1) befestigt wird, bevor die Wabenstruktur (8; 18) daran befestigt wird, die Befestigung vorzugsweise mittels eines Klebers durchgeführt wird, welcher an dem Randbereich der dampfdurchlässigen Membran (3) aufgetragen wird.

6. Verfahren nach einem der vorhergehenden Ansprüche,
**dadurch gekennzeichnet, dass** eine Nageldurchtrittsicherung (24) an der Innensohle (2) der Obermaterialstruktur (1) befestigt wird, nachdem die Wabenstruktur (8; 18) daran befestigt wurde, die Befestigung vorzugsweise mittels eines Klebers durchgeführt wird, welcher auf die obere Oberfläche des gesamten Durchtrittschutzes aufgetragen wird.

7. Verfahren zur Herstellung der Sohlenstruktur eines atmungsaktiven Schuhs, in welchem die Luft von dem Inneren des Schuhs durch eine perforierte Innensohle (2) fließt, eine Wabenstruktur (8; 18) an der Schnittstelle zwischen der Innensohle und der Außensohle (4) vorgesehen ist und Entlüftungselemente (9) an den äußeren Rändern der Außensohle zu der Außenatmosphäre und umgekehrt vorgesehen sind, wobei eine separat spritzgegossene Sohlenstruktur (4) an der Obermaterialstrulchzr (1) des Schuhs befestigt wird,
**dadurch gekennzeichnet, dass** die Sohlenstruktur des Schuhs in einer an sich bekannten Gießform hergestellt wird, welche ein Sohlenteil umfasst, welches das Trittmuster bildet, zwei Seitenteile (33a, 33b), welche in ihren Seitenwänden parallel zu der Sohlenstruktur hervorstehende Stifte (35a, 35b) haben, und ein oberes Teil, welches die obere Oberfläche der Sohlenstruktur bildet und einen Körper von der Größe der Wabenstruktur für den für die Wabenstruktur zu bildenden Hohlraum hat, dass die Gießform geschlossen wird und Spritzgießen durchgeführt wird, wobei die Stifte (35a, 35b) ausgebildet sind, um sich in engen Kontakt mit den Seitenwänden des den Hohlraum bildenden Körpers zu erstrecken, um Entlüftungselemente (9) zwischen dem Wabenstrukturhohlraum und der äußeren Atmosphäre zu bilden, dass eine separate Wabenstruktur (8; 18) in dem Wabenstrukturhohlraum der Sohlenstruktur (4) eingerichtet wird und dass die Sohlenstruktur (4) zusammen mit der Wabenstruktur (8; 18) an der perforierten Innensohle (2) der Obermaterialstruktur (1) befestigt wird, vorzugsweise durch Verklebung.

8. Verfahren nach Anspruch 7,
**dadurch gekennzeichnet, dass** die Wabenstruktur separat mit einer Kanalstruktur gegossen wird, in welcher sich die Vertiefungen zwischen den Erhöhungen über den gesamten Umfang der Wabenstruktur erstrecken, und damit wird die Wabenstruktur, wenn sie in den Wabenstruktur-Hohlraum der Sohlenstruktur (4) eingesetzt wird, mit den Entlüftungselementen (9) zusammentreffen, um eine Luftzirkulation zu ermöglichen.

9. Verfahren nach Anspruch 7,
**dadurch gekennzeichnet, dass** die Wabenstruktur (8) eine filzähnliche Struktur hat und die Wabenstruktur daher, wenn sie in den Wabenstruktur-Hohlraum der Sohlenstruktur (4) eingesetzt wird, mit den Entlüftungselementen (9) zusammentreffen wird, um eine Luftzirkulation zu ermöglichen.

10. Verfahren zur Herstellung der Sohlenstruktur eines atmungsaktiven Schuhs, in welchem die Luft von dem Inneren des Schuhs durch eine perforierte Innensohle (2) fließt, eine Wabenstruktur (8; 18) in dem Schnittbereich zwischen der Innensohle und der Außensohle (4) vorgesehen ist und Entlüftungselemente (9) an den äußeren Rändern der Außensohle zu der Außenatmosphäre und umgekehrt vorgesehen sind, wobei eine separat spritzgegossene Sohlenstruktur (4) an der Obermaterialstruktur (1) des Schuhs befestigt wird,
**dadurch gekennzeichnet, dass** die Sohlenstruktur des Schuhs in einer an sich bekannten Gießform hergestellt wird, welche ein Sohlenteil umfasst, welches das Trittmuster bildet, zwei Seitenteile (33a, 33b), welche in ihren Seitenwänden parallel zu der Sohlenebene hervorstehende Stifte (35a, 35b) haben, und ein oberes Teil, welches die obere Oberfläche der Sohlenstruktur bildet und einen Körper von der Größe der Wabenstruktur für den für die Wabenstruktur (8; 18) zu bildenden Hohlraum hat, dass die Gießform geschlossen wird und Spritzgießen durchgeführt wird, wobei die Stifte (35a, 35b) ausgebildet sind, um sich in engen Kontakt mit den Seitenwänden des den Hohlraum bildenden Körpers zu erstrecken, um Entlüftungselemente (9) zwischen dem Wabenstruktur-Hohlraum und der Außenatmosphäre zu bilden, dass eine separate Wabenstruktur (8; 18) an der Innensohle (2) der Obermaterialstruktur (1) an einer dem Wabenstruktur-Hohlraum entsprechenden Stelle befestigt wird und dass die Sohlenstruktur vorzugsweise durch Verkleben an der Innensohle (2) der Obermaterialstruktur befestigt wird, so dass die Wabenstruktur in den Wabenstruktur-Hohlraum eingreift.

11. Eine Spritzguss-Gießform zur Herstellung der Sohlenstruktur eines atmungsaktiven Schuhs, in welchem die Luft von dem Inneren des Schuhs durch die perforierte Innensohle (2) fließt, eine Wabenstruktur (8; 18) in einem Wabenstruktur-Hohlraum an der Schnittfläche zwischen der Innensohle und der Außensohle (4) vorgesehen ist und Entlüftungselemente (9) an den äußeren Rändern der Außensohle zu der Außenatmosphäre und umgekehrt vorgesehen sind, wobei die Gießform ein Sohlenteil umfasst, welches das Trittmuster bildet, zwei Seitenteile (33a, 33b) und ein oberes Teil, welches die obere Oberfläche der Sohlenstruktur bildet, **dadurch gekennzeichnet, dass** die Seitenwände der beiden Seitenteile (33a, 33b) Stifte haben (35a, 35b), welche sich parallel zu der Sohlenebene erstrecken und ausgebildet sind, um sich in engen Kontakt mit den Seitenwänden des Gießkörpers zu erstrecken, welcher den Hohlraum bildet, um Entlüftungselemente (9) zwischen dem Wabenstruktur-Hohlraum und der Außenatmosphäre vorzusehen.

## Revendications

1. Procédé de fabrication de la structure des semelles d'une chaussure pouvant respirer, dans laquelle l'air passe de l'intérieur de la chaussure par une première perforée (2), un nid d'abeille (8 ; 18) étant prévu dans l'interface entre la première et la semelle d'usure (4) et des passages d'air (9) étant prévus au niveau des bords externes de la semelle d'usure, jusque dans l'atmosphère extérieure et vice versa, la structure supérieure (1) étant installée sur la dernière (31) et la structure de la semelle de respiration étant moulée par injection et fixée, **caractérisé en ce que** le nid d'abeille (8 ; 18) est attaché d'une manière perméable à l'air à la première (2) de la structure supérieure (1), le moule (30), connu en soi, pour la structure des semelles (4), qui comprend un élément de semelle (32) formant le dessin du pas, deux éléments latéraux (33a, 33b) dotés d'épingles (35a, 35b) faisant saillie parallèlement à la structure des semelles dans leurs parois latérales, et une dernière (31) scellant le moule hermétiquement, étant fermé et le moulage par injection direct étant réalisé, lesdites épingles (35a, 35b) étant adaptées pour entrer en contact étroit avec les parois latérales du nid d'abeille (8, 18) pour former des passages d'air (9) entre le nid d'abeille et l'atmosphère extérieure, la structure des semelles étant formée directement fixée à la structure supérieure.

2. Procédé selon la revendication 1, **caractérisé en ce que** le nid d'abeille (18) a une structure en conduit et est entouré d'un bord intact (22) et **en ce que** les pointes des épingles (35a, 35b) sont adaptées pour pénétrer dans le bord (22) entourant le nid d'abeille (18) pour former des canaux (9') entre les passages d'air (9) et la structure en conduit (20, 21, 23) du nid d'abeille (18).

3. Procédé selon la revendication 1, **caractérisé en ce que** le nid d'abeille (8) a une structure de feutre et **en ce que** les pointes des épingles (35a, 35b) sont adaptées pour pénétrer dans le nid d'abeille en feutre (8) au moins jusque dans une certaine mesure afin d'étendre les passages d'air (9) jusqu'au nid d'abeille (8).

4. Procédé selon l'une quelconque des revendications précédentes, **caractérisé en ce que** la fixation du nid d'abeille (8 ; 18) sur la première (2) de la structure supérieure (1) est réalisée au moyen d'une colle, qui est appliquée sur la zone de bordure du nid d'abeille seul.

5. Procédé selon l'une quelconque des revendications précédentes, **caractérisé en ce qu'**une membrane perméable à la vapeur (3) est fixée à la première (2) de la structure supérieure (1) avant que le nid d'abeille (8 ; 18) ne soit fixé dessus, la fixation étant de préférence réalisée au moyen d'une colle, laquelle est appliquée sur la zone de bordure de la membrane perméable à la vapeur (3).

6. Procédé selon l'une quelconque des revendications précédentes, **caractérisé en ce qu'**une protection de clou (24) est fixé sur la première (2) de la structure supérieure (1) une fois que le nid d'abeille (8 ; 18) a été fixé dessus, la fixation étant de préférence réalisée au moyen d'une colle, laquelle est appliquée sur la surface supérieure de l'ensemble de la protection.

7. Procédé de fabrication de la structure des semelles d'une chaussure pouvant respirer dans laquelle l'air passe de l'intérieur de la chaussure par une première perforée (2), un nid d'abeille (8 ; 18) étant prévu dans l'interface entre la première et la semelle d'usure(4) et des passages d'air (9) étant prévus au niveau des bords externes de la semelle d'usure jusque dans l'atmosphère extérieure et vice versa, une structure de semelle séparément moulée par injection (4) étant fixée à la structure supérieure (1) de la chaussure, **caractérisé en ce que** la structure de semelle de la chaussure est fabriquée dans un moule connu en soi, qui comprend un élément de semelle formant le dessin du pas, deux éléments latéraux (33a, 33b) étant dotés d'épingles (35a, 35b) faisant saillie parallèlement au plan des semelles dans leurs parois latérales, et un élément supérieur formant la surface supérieure de la structure des semelles et doté d'un corps de la taille du nid d'abeille pour que la cavité soit formée pour le nid d'abeille, **en ce que** le moule est fermé et le moulage par injection est réalisé, lesdites épingles (35a, 35b) étant adaptées pour entrer en contact étroit avec les parois latérales du corps formant la cavité, afin de former des passages d'air (9) entre la cavité alvéolaire et l'atmosphère extérieure, **en ce qu'**un nid d'abeille distinct (8; 18) est installé dans la cavité alvéolaire de la structure de semelle (4) et **en ce que** la structure de semelle (4) avec le nid d'abeille (8 ; 18) est fixée à la première perforée (2) de la structure supérieure (1), de préférence par collage.

8. Procédé selon la revendication 7, **caractérisé en ce que** le nid d'abeille est moulé séparément avec une structure en conduit, dans laquelle les sillons entre les nervures s'étendent tout le tour du périmètre du nid d'abeille, et ainsi, lorsqu'il sera installé dans la cavité alvéolaire de la structure de semelle (4), le nid d'abeille fera interface avec les passages d'air (9) pour permettre la circulation de l'air.

9. Procédé selon la revendication 7, **caractérisé en ce que** le nid d'abeille (8) a une structure en feutre, et ainsi, lorsqu'il sera installé dans la cavité alvéolaire de la structure de semelle (4), le nid d'abeille fera interface avec les passages d'air (9) pour permettre la circulation de l'air.

10. Procédé de fabrication de la structure de semelle d'une chaussure pouvant respirer dans laquelle l'air passe de l'intérieur de la chaussure par une première perforée (2), un nid d'abeille (8 ; 18) étant prévu dans l'interface entre la première et la semelle d'usure (4) et des passages d'air étant prévus au niveau des bords externes de la semelle d'usure jusque dans l'atmosphère extérieure et vice versa, une structure de semelle moulée séparément par injection (4) étant fixée à la structure supérieure (1) de la chaussure, **caractérisé en ce que** la structure de semelle de la chaussure est fabriquée dans un moule connu en soi, qui comprend un élément de semelle formant le dessin du pas, deux éléments latéraux (33a, 33b) dotés d'épingles (35a, 35b) faisant saillie parallèlement au plan des semelles dans leurs parois latérales, et un élément supérieur formant la surface supérieure de la structure des semelles et doté d'un corps de la taille du nid d'abeille pour que la cavité soit formée pour le nid d'abeille (8 ; 18), **en ce que** le moule est fermé et un moulage par injection est réalisé, lesdites épingles (35a, 35b) étant adaptées pour entrer en contact étroit avec les parois latérales du corps formant la cavité, afin de former des passages d'air (9) entre la cavité alvéolaire et l'atmosphère extérieure, **en ce qu'**un nid d'abeille distinct (8 ; 18) est fixé à la première (2) de la structure supérieure (1) à un emplacement correspondant à la cavité alvéolaire et **en ce que** la structure de semelle est fixée de préférence par collage sur la première (2) de la structure supérieure de sorte que le nid d'abeille s'encastre dans la cavité alvéolaire.

11. Moule à injection destiné à la fabrication de la structure de semelle d'une chaussure pouvant respirer, dans laquelle l'air passe de l'intérieur de la chaussure par la première perforée (2), un nid d'abeille (8 ; 18) étant prévu dans une cavité alvéolaire au niveau de l'interface entre la première et la semelle d'usure (4) et des passages d'air (9) étant prévus au niveau des bords externes de la semelle d'usure jusque dans l'atmosphère extérieure et vice versa, le moule comprenant un élément de semelle formant le dessin du pas, deux éléments latéraux (33a, 33b) et un élément supérieur formant la surface supérieure de la structure des semelles, **caractérisé en ce que** les parois latérales des deux éléments latéraux (33a, 33b) sont dotées d'épingles (35a, 35b) s'étendant parallèlement au plan des semelles et adaptées pour entrer en contact étroit avec les parois latérales du corps du moule formant ladite cavité afin de pourvoir des passages d'air (9) entre la cavité alvéolaire et l'atmosphère extérieure.
